# EUROPEAN PATENT SPECIFICATION

(11) **EP 1 313 336 B1**
(45) Date of publication and mention of the grant of the patent: **28.12.2005**
(21) Application number: 02022928.2
(22) Date of filing: 10.10.2002
(51) Int. Cl.: H04Q 7/32

(54) **Cell search method in discontinuous reception mode in a mobile communication system**
Zellsuchverfahren im diskontinuierlichen Empfangsbetrieb in einem mobilen Kommunikationssystem
Procédé de recherche de cellule en mode de réception discontinu dans un système de communication mobile

(30) Priority: 10.10.2001 KR 2001062455
(43) Date of publication of application: 21.05.2003
(73) Proprietor: SAMSUNG ELECTRONICS CO., LTD., Suwon-City, Kyungki-do (KR)
(72) Inventor: Lim, Chae-Man, Kuro-gu, Seoul (KR); Kim, Joo-Kwang, Yongin-shi, Kyonggi-do (KR); Hur, Seong-Ho, Songnam-shi, Kyonggi-do (KR); Ryu, Dong-Ryeol, Nowon-gu, Seoul (KR); Ok, Kwang-Man, Songnam-shi, Kyonggi-do (KR)
(74) Representative: Grünecker, Kinkeldey, Stockmair & Schwanhäusser Anwaltssozietät

(56) References cited:
- EP-A- 0 967 818
- WO-A-00/10336
- WO-A-99/62285
- US-A- 5 499 386
- US-A1- 2001 026 542
- US-B1- 6 278 703

## Description

### BACKGROUND OF THE INVENTION

### I. Field of the Invention

The present invention relates generally to a cell search method in a mobile communication system, and in particular, to a cell search method in a discontinuous reception mode in order to reduce power consumption in a mobile terminal.

### 2. Description of the Related Art

In general, mobility and portability are main characteristics of a mobile terminal. To ensure the mobility and portability, a battery is used as a power source for the mobile terminal. Waiting time is a period of time where components are in a low power consumption mode. Studies have been conducted to increase the waiting time in the mobile terminal.

Most of power consumption in a mobile tenninal occurs due to sleep current, digital components, and radio frequency (RF) components in the mobile terminal. In order to increase the waiting time, power consumption in each element must be minimized. Sleep current refers to power consumption in a non-message reception period. Power consumption due to the sleep current is usually observed in an RF oscillator, an LCD (Liquid Crystal Display), a microprocessor, and power supplies. The RF oscillator experiences the highest sleep current power consumption. Therefore, power consumption in an RF oscillator must be reduced. To do so, it is necessary to reduce the time required to turn on an RF module.

A UMTS (Universal Mobile Telecommunication System) mobile terminal turns on an RF module periodically to check whether it has been paged. Specifically, the UMTS mobile terminal turns on a receiver periodically to monitor a PICH (Paging Indication Channel), detects a PI (Paging Indicator) from the PICH, and demodulates a PCH (Paging Channel) if PI=1 or PI=eraser. At the same time, the mobile terminal searches cells to determine whether there is a Node B having a higher signal strength than the current active set Node B. The cell search is usually performed in three steps, that is, slot timing synchronization, frame grouping, and a cell search.

According to the UMTS specification, a sliding PICH is used for a cell search. This is a method of buffering data while varying the turn-on time of the receiver and searching cells based on the buffered data.

However, the sliding PICH cell search method is not feasible in reality because a long time is required to collect frames of information needed for a cell search and the movement of the mobile terminal may change a radio environment during the time period.

US 6,278,703 B relates to a method and apparatus in which processing of some or all of the pilot search results is deferred until the RF power period has ended or until the searching process is otherwise terminated. The RF circuitry is powered up at some moment prior to the start of an assigned paging slot, thus giving the circuitry a chance to stabilize by the time it is required to receive and output signals. In order to facilitate system synchronization, the RF circuitry is powered up or down only at moments having substantially predetermined relation to a system reference time such as the slot boundary. A home base station supplies a list of offsets (i.e. the neighbor list) to the mobile unit for monitoring, wherein these offsets define the pilot signals of the neighbor base stations. In order to monitor the active pilot (i.e. the pilot transmitted by the home base station) and the neighbor pilots (i.e. the pilots transmitted by the neighbor base stations), a mobile unit in an IS-95 system will have at least one searcher for detecting these pilots and measuring such parameters as signal strength and time of arrival. Searching for a particular pilot is typically done by correlating the received signal with the pilot PN code. The search results may be processed, for example, to determine the received pilots' relative strength as compared to other received pilots. Parameters are supplied to the searcher for conducting active searches (i.e. searches for the active pilot) and neighbor searches (i.e. searches for the neighbor pilots). A data memory may be used for intermediate storage of search parameters and/or search results. Processing of the search results is deferred until the RF power period has ended.

WO 00/10336 relates to a device and method for acquiring and managing signals from an increased number of neighbor base stations to save battery power by enabling a mobile station to store received signals in a memory thereof in a CDMA communication system. Further, the device and method are for storing sample data of a pilot signal in a memory during a sleep mode to perform a search operation. A base station can transmit a paging message to a mobile station in either a slotted mode or a non-slotted mode. In either mode, the message is transmitted in a unit of superframe having a length of 80ms, which is called a slot. The superframe includes information about a paged mobile station, information about the base station and a list of neighbor sectors of the mobile station. For a pilot search operation performed during a superframe for receiving a message on a paging channel, a received pilot signal is stored in a memory and thereafter, an RF/analog circuit is disabled and only a searcher is enabled. Accordingly, the mobile station can perform an effective set maintenance. In particular, the mobile station enables an RF receiver by providing a power supply voltage for the transmission duration of the pilot signal. Further, the mobile station samples several symbols of the pilot signal received at around the time where the RF receiver is provided with a power supply voltage and stores the sample data in a memory. Therefore, in the mobile station an RF/analog stage is awaken from the sleep mode at a duration preceding a target pilot signal duration and enables a searcher to perform channel tuning. After storage of sample data, the searcher in the mobile station is awoken from the sleep mode to start the search operation. Since the mobile station searches the neighbor sectors in the state where only the searcher is enabled and the RF/analog stage is disabled, it is possible to reduce power consumption that the mobile station requires in searching the pilot signals. For this search time, a reacquisition process for demodulation of the paging slot is also performed. That is, the mobile station updates the active sector and neighbor sector lists through the search performed in the state where the RF/analog stage is not provided with the power supply voltage. When all the active sets and neighbor sets are searched, the search operation is ended.

EP 0 967 818 A2 relates to internal measurement methods of mobile communication systems, more particularly how to arrange time intended for signal measurement for the mobile stations. A terminal of a cellular system tries to select a certain base station within whose coverage area, i.e. cell, it operates. Among other things, the cell selection is based on the measurement of the received signal strength (RSSI, Received Signal Strength Indicator). The base stations transmit to the terminals information about the BCCH (Broadcast Control Channel) frequencies used in the adjacent cells so that the terminals know which frequencies they must monitor in order to find the BCCH transmissions of the adjacent cells. For each cell of the GSM (Global System for Mobile telecommunications) network, there is defined a list of neighboring cells which contains the broadcast control channel frequencies of those base stations to which a terminal can next move from the current cell. The mobile station measures the field strength at the broadcasting channel frequencies of those base stations defined by the list of neighboring cells, forms the average for each, and on the basis of the results it generates a list of the six strongest neighboring base stations. The aim is to decode the identity codes of the six strongest received neighbors, and a report to the network is made about the levels and identity codes of those base stations for which the identity codes were decoded. The information is used by the network for decisions about change of base station providing service (handover). There are collected measurement data at a suitable point during a frame and by performing both RSSI and OTD (Observed Time Difference) measurements from the same collected measurement data. A received signal is directed from the antenna via a transmission/reception switch to a receiver block which demodulates the received signal and performs the decryption and channel decoding. The receiver block comprises typically an RF section which comprises a mixer. The signal generated by the RF section is supplied to an A/D converter. A DSP block collects the samples generated by the A/D converter during the RSSI and OTD measurement period and generates the RSSI and OTD measurement results on the basis of the same collected data. The DSP block comprises a buffer which collects in its memory digital data generated by the A/D converter. The DSP unit, more particularly its buffer or a corresponding memory unit, stores the data generated by the A/D converter during a certain predetermined period. This measurement data represents essentially the signal received by the mobile station's antenna at said frequency. From the stored data, the DSP unit generates the RSSI and OTD measurement results.

US 5,499,386 B relates to handoff of mobile stations within cellular radio systems. A mobile station is served by a base station of the cell level which is the preferred service provider for that mobile as long as the signal quality is above a selected minimum value. Should the signal quality deteriorate below that selected minimum value, best service selection possibilities are evaluated on the same level, and such possibilities are first exhausted before handoff is made to a cell on a lower preference level. Whether or not to hand off the mobile to a base station serving an associated cell is determined based upon whether the signal strength of the radio signal therefrom is greater than the threshold value. Each cell is provided with a list of neighboring cells, the service areas of which approximately associated with the service area of the cell. The mobile station measures the signal strength for the neighboring cells and for the serving channel. Thereafter, the mobile selects a first channel for evaluation and it is determined whether or not that channel comes from a preferred neighbor cell. If so, it is determined whether or not the signal strength for the neighbor cell is greater than a pre-selected threshold value plus the hysteresis, if any. If not, it is determined whether or not the last neighbor cell has been evaluated. If, however, the signal strength for the neighbor cell is greater than the threshold value plus the hysteresis, if any, the mobile station returns to this neighbor cell value to receive and store information broadcast on this newly selected channel. If, however, the channel being evaluated is determined to not be a preferred neighbor cell, it is determined whether or not the neighbor cell is one with equal preference. If not, i.e. the cell is a non-preferred neighbor cell, it is determined whether or not the serving channel signal strength is less than a pre-selected threshold value plus the hysteresis, if any. If not, it is determined if the last neighbor cell has been evaluated. If it is determined that the serving channel signal strength is lower than the threshold value minus the hysteresis value, if any, it is determined whether or not the neighbor cell's signal strength is greater than the serving channel's signal strength and if not, it is determined whether or not the last neighbor has been evaluated. If the neighbor cell's signal strength is determined to be greater than the serving channel's signal strength, then the mobile station returns to this neighbor cell to receive and store information broadcast on this channel.

WO 99/62285 relates to a power management system for a mobile unit wherein the frequency of scanning a neighboring cell may be controlled. A mobile unit consumes power in standby mode by periodically scanning the base station in each neighboring cell to determine which base stations are providing a usable signal. In a call detection mode, the mobile unit receives, stores and examines paging message data and determines whether the data contains an identifier matching an identifier of the mobile unit. If a match is detected, the mobile unit establishes a call with the mobile switching center via the base station. If no match is detected, the mobile unit enters an idle state for a predetermined period of time, then exits the idle state to receive another transmission of paging message data. While in one cell, the mobile unit periodically checks the signal strength of the base stations in each neighboring cell. The default scanning rate is the rate prescribed by the service provider. To reduce power consumption, the mobile unit does not scan each neighbor cell at the rate prescribed by the base station. Rather, the mobile unit detects the signal quality and if the quality is sufficient, skips a number of scanning cycles. A variety of indicators are used by the mobile unit to determine signal quality. Among these indicators is a receive signal strength indicator.

US 2001/0026542 A1 relates to a mobile station for a CDMA communication system capable of avoiding a handoff to a remaining base station whose signal strength is not continuously large. The mobile station consists of a reverse spread modulation unit, a signal strength calculation unit, a search control unit, a search information storage unit, and a PN sequence generation unit. The search information storage unit stores a set of search information comprising a currently communicating base station number, a list (called a neighbor list) of neighbor base stations' numbers, and a remaining search interval number R-INC for searching remaining base stations. The neighbor list and the R-INC are transmitted from the active base station so that the search information storage unit can receive and store them. The signal strength calculation unit calculates a strength of the pilot signal of each base station transmitted from the reverse spread modulation unit. Specifically, this unit calculates a value of Ec/Io as a signal strength obtained by dividing a signal energy of each base station Ec by total energy of signals Io. The search control unit repeats a search where one cycle consists of searches for the active base station or neighbor base stations and remaining base stations selected with R-INC in this order. Next, the search control unit decides a handoff between base stations according to the following criterion (B1) or (B2). (B1): In case that the maximum value of the strength of the signal transmitted from one of the neighbor base stations is larger than that from the active base station, a handoff to the neighbor base station is performed promptly. (B2): In case that the strength of the signal transmitted from one of the remaining base stations is larger than that from the active base station, the search control unit shifts to the confirmation mode where the remaining base station is designated as a confirmation target. In the confirmation mode, the search control unit conducts a search according to the following sequence. After repeating a search of the active base station and all neighbor base stations as one set N times, the search control unit conducts a search for a confirmation target remaining base station. This is one cycle of the search and this search is repeated a predetermined number of cycles. In the confirmation mode, the search control unit determines a handoff between base stations according to the following criterion (D1) or (D2). (D1): In case that the maximum value of strength of the signal transmitted from one of the neighbor base station is larger than that of the active base station, the search control unit performs a handoff to the neighbor base station. (D2): In case that the strength of the signal transmitted from the confirmation target remaining base station is larger than that of the active base station a predetermined number of times in a row, the search control unit performs a handoffto the remaining base station. During a search operation in a normal mode, the search control unit obtains the strength of the signal transmitted from the active base station from the signal strength calculation unit. Next, the search control unit refers to the search information storage unit to identify all base stations to be selected as neighbor base stations and obtains all strength of signals transmitted from the neighbor base stations in the same way as the active base station. In case that the maximum value of the strength of signals transmitted from the neighbor base stations is not larger than that from the active base station, the search control unit increments the value n which indicates the number of times of searching the neighbor base stations. If the value n is smaller than N, which indicates the number of times to be searched, then the search control unit repeats the search of the active and neighbor base stations. If the value of the n becomes equal to N, which indicates the number of times to be searched, then the search control unit conducts a search for the confirmation target remaining base station.

### SUMMARY OF THE INVENTION

The present invention is defined by the independent claims. Embodiments of the invention are given by the dependent claims.

It is, therefore, an advantage of the present invention to provide an offline cell search method that increases the waiting time of a mobile terminal in a discontinuous reception mode in a mobile communication system that transmits a neighbor list.

It is another advantage of the present invention to provide a method of searching cells in a discontinuous reception mode only when the signal strength of an active set Node B is equal to or less than a threshold in order to increase the waiting time of a mobile terminal in a mobile communication system.

It is a further advantage of the present invention to provide a method of performing a cell search only on neighbor cells having signal strengths greater than a threshold in a discontinuous reception mode in order to increase the waiting time of a mobile terminal in a mobile communication system.

To achieve the above and other advantages, there is provided a cell search method in a discontinuous reception mode in a mobile terminal that receives a neighbor list from a Node B. The mobile terminal performs slot timing synchronization by supplying power to a receiver, buffers data received from neighbor cells included in the neighbor list, turns off an RF module, and performs an oftline cell search using the buffered data.

### BRIEF DESCRIPTION OF THE DRAWINGS

The above and other features and advantages of the present invention will become more apparent from the following detailed description when taken in conjunction with the accompanying drawings in which:
FIG. 1 is a block diagram of a receiver for performing an offline cell search according to an embodiment of the present invention;
FIG. 2 is a flowchart illustrating a cell search method in a discontinuous reception mode in a mobile communication system according to the embodiment of the present invention;
FIG. 3 is a detailed flowchart illustrating an offline cell search depicted in FIG. 2;
FIG. 4 is a flowchart illustrating a cell search method in a discontinuous reception mode in a mobile communication system according to another embodiment of the present invention; and
FIG. 5 is a flowchart illustrating a cell search method in a discontinuous reception mode in a mobile communication system according to a third embodiment of the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

Three cmhodiments are provided to reduce power consumption during a cell search in a discontinuous reception mode in a mobile communication system and thus to increase the waiting time of a mobile terminal. One of them is a three-step offline cell search in the last step of the conventional cell search process. Another is to search all of the neighbor cells periodically, select neighbor cells to which a handover is probable to occur, and periodically monitor the selected neighbor cells. The other is not to perform a cell search when the energy of the current active set Node B is equal to or greater than a threshold. The embodiments can be implemented individually or in combination.

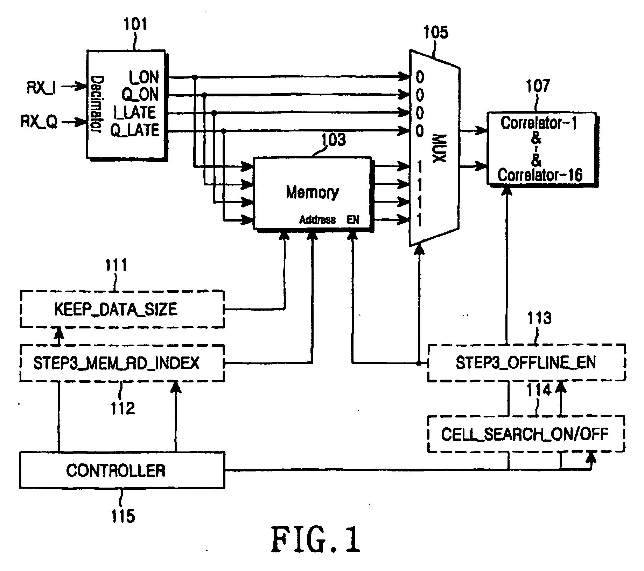

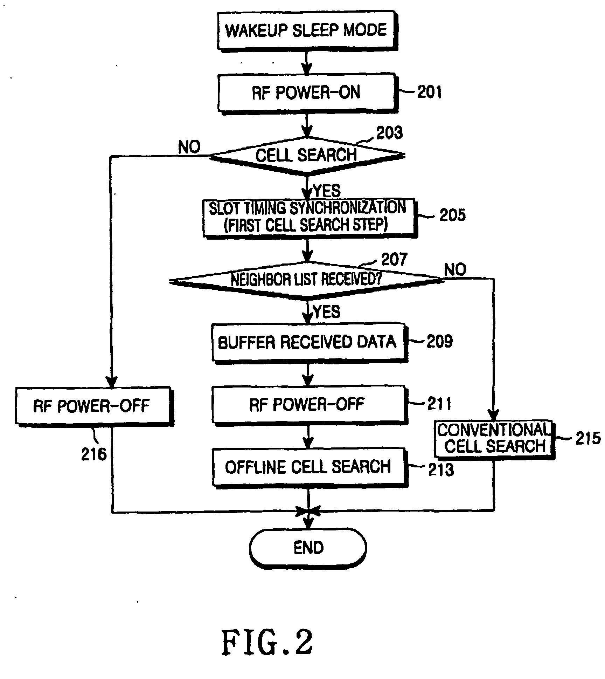

Referring to FIGs. 1 and 2, the first embodiment of the present invention will be described. FIG. 1 is a block diagram of a receiver for performing a cell search in a mobile communication system and FIG. 2 is a flowchart illustrating a cell search according to the first embodiment of the present invention.

Referring to FIG. 1, a decimator 101 receives an I (In-Phase) signal Rx_I and a Q (Quadrature-Phase) signal Rx_Q and outputs 1 on-time data I_On, Q on-time data Q_On, I late-time data I_Late, and Q late-time data Q_Late. A memory 103 receives the data from the decimator 101 and operates according to an offline enable signal STEP3_OFFLINE_EN 113 received from a higher layer. If the oftline enable signal STEP3_OFFLINE_EN 113 is set to enable, the memory 103 receives a buffering indication signal KEEP_DATA_SIZE 111 indicating the amount of data to be buffered from the higher layer and buffers as much data received from the decimator 101 as indicated. The size of the buffered data is calculated by adding one slot duration (2560) to an accumulation period Nc and multiplying the addition result by 2 samples per chip. Then the memory 103 receives u data read signal STEP3_MEM_RD_INDEX 112 from the higher layer nncl reads data at a position as indicated by the data read signal. A multiplexer (MUX) 105 selects the data received from the decimator 101 or the data received from the memory 103 according to the offline enable signal STEP3 OFFLINE_EN 113. If the offline enable signal STEP3_OFFLINE_EN 113 is set to disable, the MUX 105 selects the data received from the decimator 101, and if the offline enable signal STEP3_OFFLINE_EN 113 is set to enable, it selects the data received from the memory 103. The output of the MUX 105 is applied to the input of a correlator unit 107. The controller 115 gives buffering indication signal KEEP_DATA_SIZE 111 to memory, data read signal STEP3 MEM_RD_INDEX determined by a index of a 1^{st} correlation value to memory, offline enable signal STEP3_OFFLINE_EN 113 to the multiplexer (MUX) 105 and memory 103. Also controller 115 detennines cell searching on/off and gives cell searching off signal CELL_SEARCH_ON/OFF 114 to the correlator 107. The correlator unit 107 includes a plurality of correlators, 16 correlators in FIG. 1. In this case, a cell search can be performed on up to 16 at least one Node H simultaneously. Each correlator measures a correlation between an internally generated scrambling code and the input data on a chip basis. When the offline enable signal is set to enable, this implies that the third cell search step is performed in an offline mode. The data buffering may be performed in the first cell search step.

The mobile terminal wakes up from sleep at various occasions, for example, when an RF module is periodically turned on for PI monitoring or when other interrupts are generated. If it is paged, the mobile terminal receives a paging message and searches cells simultaneously in some cases.

Referring to FIG. 2, after the mobile terminal wakes up from sleep, it supplies power to an RF module in step 201. Here, it is to be noted that the following description is confined to only a cell search. The mobile terminal determines whether a cell search is to be performed in step 203. The cell search is periodically performed using an internal timer (not shown). If no cell search is to be performed, RF Power is turned off in step 216 and the process ends. If a cell search is to be performed, the mobile terminal performs the first cell search step, that is, slot timing synchronization in step 205. In the first cell search step, N peak values higher than a predetermined value are obtained in a correlation operation. In step 207, the mobile terminal determines whether a neighbor list has been received from a serving Node B. Upon receipt of the neighbor list, the mobile terminal provides a buffering indication signal to the memory 103 of FIG. 1 and the memory 103 buffers data received from N Node B in the neighbor list in step 209. The mobile terminal turns off the RF module in step 211 and performs an offline cell search in step 213. On the other hand, if the neighbor list is not received in step 207. the mobile terminal performs the conventional online cell search in step 215.

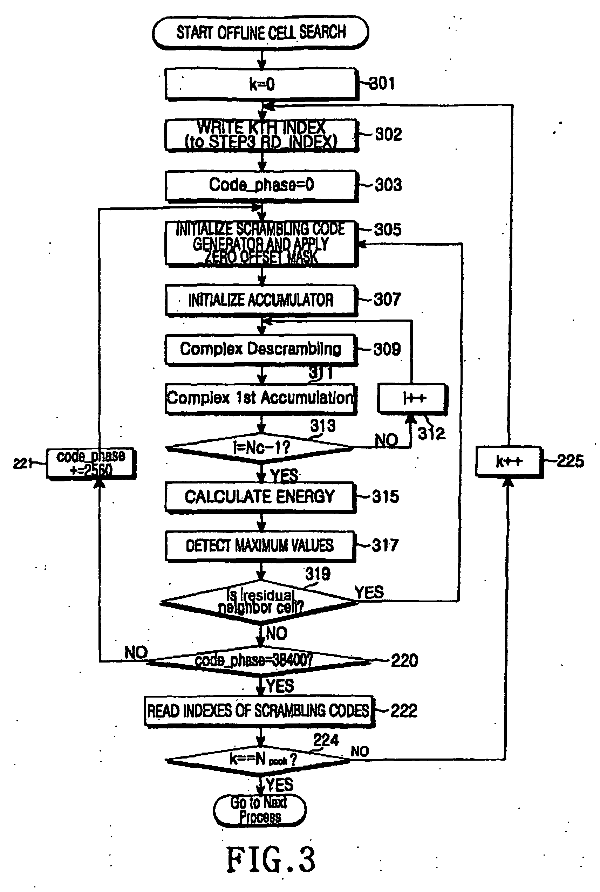

FIG. 3 is a flowchart illustrating a three-step offline cell search in a discontinuous reception mode according to the embodiment of the present invention. The offline cell search is performed only if the neighbor list is received.

Steps 301 to 307 pertain to initialization for cell search. The mobile terminal sets a variable K indicating the number of peaks equal to or greater than a threshold achieved in the first cell search step to 0 in step 301 and designates a position in the memory 103 for correlating a kth peak in step 302. The index of the kth peak is written in a register 112 in FIG. 1. In step 303, the phase of a scrambling code is set to an initial value 0. The mobile terminal initializes scrambling code generators (not shown) for the correlators and applies a zero offset mask in step 305. The zero offset mask matches the time of generating scrambling codes to a 0^{th} slot boundary. In step 307, a variable i indicating a data accumulation value is set to an initial value 0 and an accumulator is initialized. Then, the mobile terminal complex-despreads a first peak among the N peaks obtained from the first cell search step of FIG. 2 on a chip-by-chip basis, correlates the first peak in step 309 and accumulates the correlation result in step 311. In step 313, the variable i is compared with the predetermined accumulation period Nc to determine whether the first peak has been correlated for the accumulation period Nc. If the correlation is not completed for the accumulation period, the variable i is increased by 1 in step 312 and the procedure returns to step 309. That is, steps 309 and 311 are repeated until the correlation is completed for the accumulation period Nc. Upon completion of the correlation for the accumulation period Nc, the mobile terminal calculates the energy level of the accumulated data in step 315 and detects the highest correlation values by comparing successively received correlation values of the neighbor cells in step 317. The number of the highest correlation values is not limited but is 3 here. In step 319, the mobile terminal checks whether there remain neighbor cells to be searched in the neighbor list. If neighbor cells remain, steps 305 to 317 are repeated for the remaining neighbor cells. If it is determined that the energy level of all neighbor cells has been calculated in step 319, the mobile terminal checks whether the scrambling code phase is 38400 chips in step 220 to determine whether the above steps have been performed for a frame. If the frame is yet to be processed, the mobile terminal increases the code phase by one slot, that is, 2560 chips in step 221 and then repeats steps 305 to 319. When the energy level of the frame is calculated for all the neighbor cells, the mobile terminal reads the energy level and phase indexes of the three scrambling codes corresponding to the three highest energy levels in step 222. The indexes of the scrambling codes are listed in the neighbor list. In step 224, the mobile terminal performs the three-step cell search for all the peaks obtained in the first cell search step of FIG. 2.

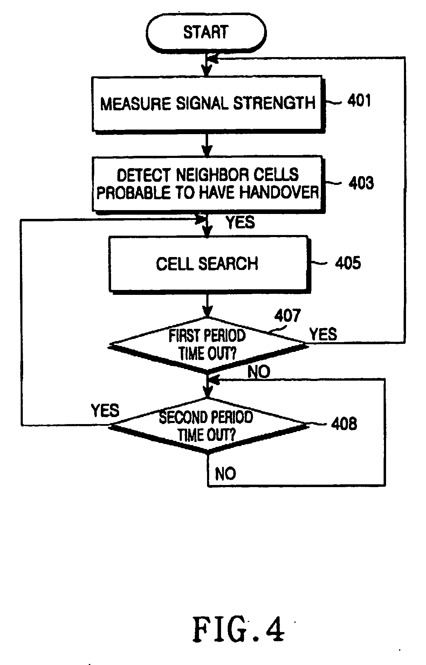

FIG. 4 is a flowchart illustrating a cell search method in a discontinuous reception mode in a mobile communication system according to another embodiment of the present invention.

Referring to FIG. 4, the mobile terminal measures the signal strengths of neighbor cells in step 401 and searches for neighbor cells to which a handover may occur in step 403. The neighbor cells to which a handover can occur can be determined by checking if the signal strengths are greater than a threshold. If such neighbor cells are detected, the mobile terminal determines whether a first predetermined time period has expired in step 407. If it has, the mobile terminal returns to step 401 and otherwise, the mobile terminal determines whether a second predetermined time period has expired in step 409. If the second predetermined time period has expired, the mobile terminal returns to step 405. The first time period is longer than the second time period. That is, if a cell search is repeated for the neighbor cells to which a handover can occur for the first time period and then the first time period elapses, it is determined that the neighbor cells probable to have a handover have been changed by measuring the signal strengths of all the neighbor cells.

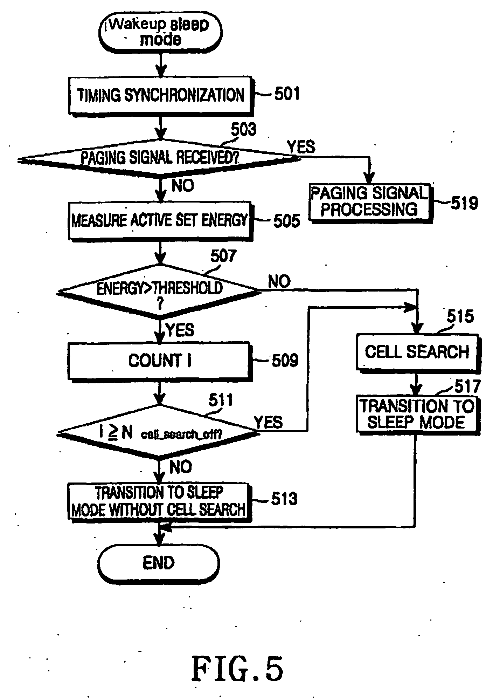

FIG. 5 is a flowchart illustrating a cell search method according to a third embodiment of the present invention. Referring to FIG. 5, the mobile terminal acquires timing different from the timing of the active set in step 501 after it wakes up from sleep. In step 503, the mobile terminal determines whether a paging signal has been received. Upon receipt of the paging signal, the mobile terminal processes the paging signal in step 519. If the paging signal has not been received, the mobile terminal measures the energy level of the active set in step 505 and compares the energy level with a threshold in step 507. If the energy level exceeds the threshold, the mobile terminal counts the number of cells i that have not been searched in step 509. If the energy level is equal to or less than the threshold, the mobile terminal performs a cell search in step 515. After step 509, the mobile terminal compares the variable i with the number of cells that are not supposed to be searched. Ncell_search_off in step 511. If i is less than Ncell_search_off, the mobile terminal transitions to a sleep mode without a cell search in step 513. If i is equal to or greater than Ncell_search_off, the mobile terminal performs a cell search in step 515 and then transitions to the sleep mode in step 517.

In accordance with the present invention as described above, the three-step cell search is performed offline, a cell search is performed only on cells to which a handover may occur, and a cell search is not performed when the energy level of an active set is high enough. Therefore, power is saved in an RF module and the waiting time of a mobile terminal is increased.

## Claims

1. A cell search method in a mobile terminal that receives a neighbor list from a Node B, comprising performing (515) a cell search,
**characterized in that**
the method further comprises the steps of:
measuring (505) energy levels of an active set of a plurality of Node B in the neighbor list when the mobile terminal wakes up from sleep;
comparing (507) the energy levels with a threshold;
omitting the cell search of a Node B of said active set if the energy level of this Node B is greater than the threshold;
performing the cell search on a plurality of Node B of said active set if the energy levels of this plurality of Node B are less than the threshold; and
transitioning (513, 517) to a sleep mode.

2. The cell search method of claim 1, further comprising the steps of:
counting (509) the number of Node B that have not been searched if the energy level of a Node B of said active set is greater than the threshold, wherein the threshold indicates a predetermined cell coverage; and
performing the cell search if the number is greater than or equal to a predetermined value.

3. The cell search method of claim 1, further comprising performing (515) the cell search if the number of occurrences of performing the step (513) of omitting the cell search and transitioning to the sleep mode is equal to or greater than a predetermined value.

4. The cell search method of one of claims 1 to 3, further comprising the step of performing the cell search on the plurality of Node B of said active set if the energy levels of this plurality of Node B are equal to or less than the threshold.

5. An apparatus adapted to perform controlling cell searching according to one of claims 1 to 4.

6. The apparatus of claim 5, comprising:
a memory (103) for buffering received data from a decimator (101);
a multiplexer (105) for selecting on/off-line cell searching;
a correlator (107) for performing cell searching; and
a controller (115) for outputting a predetermined buffering data size information (111) to the memory, outputting an address information (112) for reading data from the memory, outputting a signal (113) for controlling the multiplexer and outputting a signal (114) for selecting enable/disable cell searching to the correlator.

## Patentansprüche

1. Zellsuchverfahren in einem Mobilterminal, das von einem Node-B (einer Basisstation) eine Nachbarliste empfängt, umfassend das Durchführen (515) einer Zellsuche und
**dadurch gekennzeichnet, dass**
das Verfahren weiterhin folgende Schritte umfasst:
Messen (505) von Energielevels eines aktiven Sets einer Vielzahl von Node-B in der Nachbarliste, wenn das Mobilterminal aus dem Schlaf erwacht;
Vergleichen (507) der Energielevels mit einem Schwellwert;
Auslassen der Zellsuche eines Node-B des aktiven Sets, wenn das Energielevel dieses Node-B größer als der Schwellwert ist;
Durchführen der Zellsuche auf einer Vielzahl von Node-B des aktiven Sets, wenn die Energielevels dieser Vielzahl von Node-B geringer sind als der Schwellwert; und
Übergehen (513, 517) in einen Schlafmodus.

2. Zellsuchverfahren nach Anspruch 1, weiterhin umfassend folgende Schritte:
Zählen (509) der Anzahl von Node-B, die nicht gesucht wurden, wenn das Energielevel eines Node-B des aktiven Sets größer als der Schwellwert ist, wobei der Schwellwert eine vorbestimmte Zellabdeckung (cell coverage) angibt; und
Durchführen der Zellsuche, wenn die Anzahl größer oder gleich einem vorbestimmten Wert ist.

3. Zellsuchverfahren nach Anspruch 1, weiterhin umfassend das Durchführen (515) der Zellsuche, wenn die Anzahl des Auftretens des Durchführens des Schrittes (513) des Auslassens der Zellsuche und Übergehens in den Schlafmodus gleich oder größer einem vorbestimmten Wert ist.

4. Zellsuchverfahren nach einem der Ansprüche 1 bis 3, weiterhin umfassend den Schritt des Durchführens der Zellsuche auf der Vielzahl von Node-B des aktiven Sets, wenn die Energielevels dieser Vielzahl von Node-B gleich oder niedriger als der Schwellwert sind.

5. Eine Vorrichtung, die dazu angepasst ist, eine Zellsuchsteuerung gemäß einem der Ansprüche 1 bis 4 durchzuführen.

6. Vorrichtung nach Anspruch 5, umfassend:
einen Speicher (103) zum Puffern empfangener Daten von einem Dezimator (101);
einen Multiplexer (105) zum Auswählen von On-/Offline-Zellsuche;
einen Korrelator (107) zum Durchführen von Zellsuche; und
einen Controller (115) zum Ausgeben einer vorbestimmten Pufferdatengrößeninformation (111) an den Speicher, zum Ausgeben einer Adressinformation (112) zum Lesen von Daten aus dem Speicher, zum Ausgeben eines Signals (113) zum Steuern des Multiplexers und zum Ausgeben eines Signals (114) zum Auswählen des Aktivierens/Deaktivierens (enable/disable) der Zellsuche an den Korrelator.

## Revendications

1. Procédé de recherche de cellule dans un terminal mobile qui reçoit une liste de voisins d'un noeud B, comprenant l'étape d'exécution (515) d'une recherche de cellule,
**caractérisé en ce que** le procédé comprend en outre les étapes consistant à :
mesurer (505) les niveaux d'énergie d'un ensemble actif d'une pluralité de noeuds B dans la liste de voisins lorsque le terminal mobile s'éveille à partir d'un état de sommeil ;
comparer (507) les niveaux d'énergie avec un seuil ;
omettre la recherche de cellule d'un noeud B dans ledit ensemble actif si le niveau d'énergie de ce noeud B est supérieur au seuil ;
exécuter la recherche de cellule sur une pluralité de noeuds B dudit ensemble actif si les niveaux d'énergie de cette pluralité de noeuds B sont inférieurs au seuil ; et
passer (513, 517) en mode de sommeil.

2. Procédé de recherche de cellule selon la revendication 1, comprenant en outre les étapes consistant à :
compter (509) le nombre de noeuds B qui n'ont pas été recherchés lorsque le niveau d'énergie d'un noeud B dudit ensemble actif est supérieur au seuil, le seuil indiquant une couverture prédéterminée de cellule ; et
exécuter la recherche de cellule si le nombre est supérieur ou égal à une valeur prédéterminée.

3. Procédé de recherche de cellule selon la revendication 1, comprenant en outre l'étape consistant à exécuter (515) la recherche de cellule si le nombre des exécutions de l'étape (513) consistant à omettre la recherche de cellule et à passer en mode de sommeil est égal ou supérieur à une valeur prédéterminée.

4. Procédé de recherche de cellule selon l'une des revendications 1 à 3, comprenant en outre l'étape consistant à exécuter la recherche de cellule sur la pluralité de noeuds B dudit ensemble actif si les niveaux d'énergie de cette pluralité de noeuds B sont égaux ou inférieurs au seuil.

5. Appareil adapté pour exécuter la commande de la recherche de cellule selon l'une des revendications 1 à 4.

6. Appareil selon la revendication 5, comprenant :
une mémoire (103) pour stocker en mémoire-tampon des données reçues d'un décimateur (101) ;
un multiplexeur (105) pour sélectionner la recherche de cellule en ligne/hors ligne ;
un corrélateur (107) pour exécuter la recherche de cellule ; et
un contrôleur (115) pour fournir une information prédéterminée de taille de données à stocker en mémoire-tampon (111) à la mémoire, fournir une information d'adresse (112) pour lire des données dans la mémoire, fournir un signal (113) de commande du multiplexeur et fournir un signal (114) pour sélectionner la validation/inhibition de la recherche de cellule sur le corrélateur.
